(19) **Europäisches Patentamt**
**European Patent Office**
**Office européen des brevets**

(11) **EP 4 692 206 A1**

(12) **EUROPEAN PATENT APPLICATION**
published in accordance with Art. 153(4) EPC

(43) Date of publication:
**11.02.2026 Bulletin 2026/07**

(21) Application number: **24778682.5**

(22) Date of filing: **05.02.2024**

(51) International Patent Classification (IPC):
*C08L 23/02* (2025.01)      *C08K 3/013* (2018.01)
*C08L 23/26* (2025.01)      *C08L 53/02* (2006.01)
*C09J 11/04* (2006.01)      *C09J 11/08* (2006.01)
*C09J 123/00* (2006.01)     *C09J 153/02* (2006.01)

(52) Cooperative Patent Classification (CPC):
**C08K 3/013; C08L 23/02; C08L 23/26; C08L 53/02;
C09J 11/04; C09J 11/08; C09J 123/00;
C09J 153/02**

(86) International application number:
**PCT/JP2024/003693**

(87) International publication number:
**WO 2024/202537 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 JP 2023050585**

(71) Applicant: **TOYOBO MC Corporation
Osaka-shi, Osaka 530-0001 (JP)**

(72) Inventors:
• **MURAKAMI, Yuuki**
 **Otsu-shi, Shiga 520-0292 (JP)**
• **MIURA, Wataru**
 **Otsu-shi, Shiga 520-0292 (JP)**
• **IWASHITA, Yuuji**
 **Otsu-shi, Shiga 520-0292 (JP)**

(74) Representative: **Müller-Boré & Partner
Patentanwälte PartG mbB
Friedenheimer Brücke 21
80639 München (DE)**

(54) **RESIN COMPOSITION AND HOT-MELT ADHESIVE COMPOSITION**

(57)      An object of the present invention is to provide a resin composition exhibiting excellent water vapor barrier properties while maintaining the flowability, the adhesiveness, and the thermal shock resistance of resin exhibiting excellent low-pressure moldability. A resin composition containing: a polyolefin resin (A); an acid-modified polyolefin resin (B); a styrene-isobutylene-styrene block copolymer (C); an adhesion imparting agent (D); and a filler (E), wherein, when a total content of the polyolefin resin (A), the acid-modified polyolefin resin (B), the styrene-isobutylene-styrene block copolymer (C), and the adhesion imparting agent (D) is taken as 100 parts by mass, a content of the styrene-isobutylene-styrene block copolymer (C) is 8 to 32 parts by mass, a content of the adhesion imparting agent (D) is 8 to 27 parts by mass, and a content of the filler (E) is 1 to 13 parts by mass, and wherein the filler (E) is plate-shaped.

[FIG. 1]

**Description**

Technical Field

The present invention relates to a resin composition. In more detail, the present invention relates to a resin composition exhibiting excellent flowability, water vapor barrier properties, adhesiveness, and thermal shock resistance, and to a hot-melt adhesive composition.

Background Art

As to an insulating resin used for sealing electric/electronic components used in vehicles, electric appliances, and the like, a two-pack curing epoxy resin or a silicon resin has generally been used. However, the use of these resins requires a prolonged step and may possibly damage the electric/electronic components by contraction stress that occurs when the resins are cured. Therefore, recently known is a technique for sealing electric/electronic components by low-pressure molding, using a thermoplastic resin.

From the viewpoint of electrically insulating properties, water resistance, durability, and melt viscosity, a polyester resin has been used as a suitable material for sealing electric/electronic components. However, when the polyester resin is subjected to low-temperature and low-pressure molding for reducing damage to electric/electronic components, adhesiveness between the electric/electronic components and the sealing resin is insufficient. As a result, the aimed electrically insulating properties and waterproof are not often exhibited sufficiently. Therefore, from the viewpoint of enhancing the adhesiveness, an attempt to blend, for example, an adhesion imparting agent having a functional group is actively being studied (e.g. Patent Document 1).

Prior Art Documents

Patent Documents

Patent Document 1: Japanese Patent Application Laid-Open (JP-A) No. 2004-210893

Disclosure of the Invention

Problem that the Invention is to Solve

In the sealing resin for the electric/electronic components, high-level water vapor barrier properties have recently been required in addition to the prerequisite physical properties described above. When the thermoplastic resin of Patent Document 1 having an adhesion imparting agent blended therein is used, the adhesiveness is improved but the water vapor barrier properties are not secured. As described above, there has not ever been proposed a sealing resin composition capable of achieving the water vapor barrier properties while maintaining the flowability, the adhesiveness, and the thermal shock resistance of resin particularly exhibiting excellent low-pressure moldability.

The present invention has been made to solve these problems of the conventional techniques. That is, an object of the present invention is to provide a resin composition exhibiting excellent water vapor barrier properties while maintaining the flowability, the adhesiveness, and the thermal shock resistance of resin exhibiting excellent low-pressure moldability.

Means for Solving the Problem

As a result of earnest studies, the inventors of the present invention have found that the problems can be solved by the means described below, and have arrived at the present invention. That is, the present invention consists of the following aspects.

(1) A resin composition containing: a polyolefin resin (A); an acid-modified polyolefin resin (B); a styrene-isobutylene-styrene block copolymer (C); an adhesion imparting agent (D); and a filler (E), wherein, when a total content of the polyolefin resin (A), the acid-modified polyolefin resin (B), the styrene-isobutylene-styrene block copolymer (C), and the adhesion imparting agent (D) is taken as 100 parts by mass, a content of the styrene-isobutylene-styrene block copolymer (C) is 8 to 32 parts by mass, a content of the adhesion imparting agent (D) is 8 to 27 parts by mass, and a content of the filler (E) is 1 to 13 parts by mass, and wherein the filler (E) is plate-shaped.

(2) The resin composition according to (1), wherein the polyolefin resin (A) contains a polypropylene resin, and further contains at least one of an ethylene-$\alpha$-olefin copolymer and a propylene-$\alpha$-olefin copolymer.

(3) The resin composition according to (1) or (2), wherein the acid-modified polyolefin resin (B) has a melting point of 100°C or higher.

(4) The resin composition according to any of (1) to (3), wherein a content of styrene in the styrene-isobutylene-styrene block copolymer (C) is 10 to 30 wt%.

(5) The resin composition according to any of (1) to (4), wherein the adhesion imparting agent (D) has a hydroxyl value of 1 to 100 mgKOH/g.

(6) The resin composition according to any of (1) to (5), wherein, when the total content of the polyolefin resin (A), the acid-modified polyolefin resin (B), the styrene-isobutylene-styrene block copolymer (C), and the adhesion imparting agent (D) is taken as 100 parts by mass, a content of the polyolefin resin (A) is 38 to 70 parts by mass, and a content of the acid-modified polyolefin resin (B) is 1 to 22 parts by mass.

(7) A hot-melt adhesive composition containing the resin composition according to any of (1) to (6).

Advantages of the Invention

The resin composition according to the present invention exhibits the flowability, the adhesiveness, and the thermal shock resistance of resin exhibiting excellent low-pressure moldability, and further exhibits excellent water vapor barrier properties. Therefore, by using the resin composition according to the present invention as a material for sealing a product that requires high waterproof, it is possible to provide the product with satisfying water vapor barrier properties. The resin composition according to the present invention can be used particularly as a hot-melt adhesive, and is suitable especially for the purpose of sealing electric/electronic components.

Brief Description of the Drawings

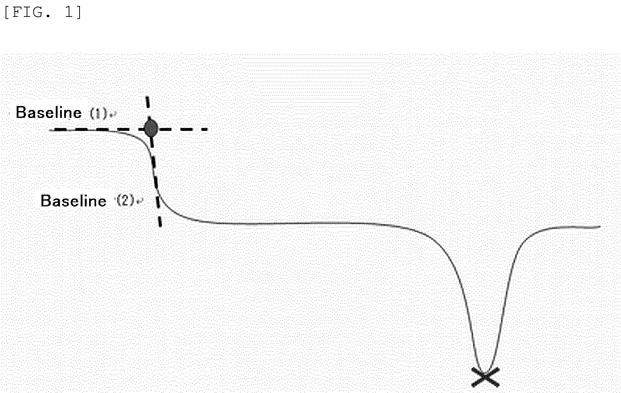

[FIG. 1] FIG. 1 illustrates a schematic chart obtained through measurement with a differential scanning calorimeter.

Mode for Carrying Out the Invention

Hereinafter, the present invention is described in detail.

<Polyolefin resin (A)>

The resin composition according to the present invention contains a polyolefin resin (A). By blending the polyolefin resin (A), good water vapor barrier properties can be imparted to the resin composition. The polyolefin resin (A) used in the present invention is not particularly limited, but a polypropylene resin is preferable from the viewpoint of the water vapor barrier properties. From the viewpoint of the adhesiveness to a metal or a film, an ethylene-$\alpha$-olefin copolymer or a propylene-$\alpha$-olefin copolymer is preferable. In order to achieve the water vapor barrier properties and the adhesiveness at high levels, the polypropylene resin, and the ethylene-$\alpha$-olefin copolymer or the propylene-$\alpha$-olefin copolymer can be used in combination. Here, the polypropylene resin refers to a so-called homopolypropylene that consists of mainly a propylene unit, and that does not contain a copolymerization component, such as an $\alpha$-olefin, other than propylene, or contains as small amount as about 1 mol% at the most even if the polypropylene resin contains a copolymerization component. The polyolefin resin (A) does not correspond to an acid-modified polyolefin resin (B) described later, and refers to those having not been acid-modified.

When the polypropylene resin, and the ethylene-$\alpha$-olefin copolymer and/or the propylene-$\alpha$-olefin copolymer (hereinafter collectively called the olefin copolymer) are used in combination as the polyolefin resin (A), a preferable blending ratio of polypropylene resin/olefin copolymer(s) is 20/80 to 80/20 by mass ratio, is more preferably 30/70 to 70/30 by mass ratio, and is further preferably 40/60 to 60/40 by mass ratio. By setting the blending ratio to fall within the above range, particularly the water vapor barrier properties and the adhesiveness can be achieved at high levels.

The polyolefin resin (A) used in the present invention preferably exhibits a melt mass-flow rate (hereinafter sometimes abbreviated as MFR) measured in accordance with JIS K 7210-1: 2014 (test temperature 190°C, nominal load 2.16 kg) of 10 to 70 g/10 min. By setting the melt mass-flow rate to more than or equal to the above lower limit value, the resin composition keeps its appropriate flowability and thus exhibits good moldability. By setting the melt mass-flow rate to less than or equal to the above upper limit value, the resin composition is prevented from decreasing its viscosity and thereby being extremely softened, and thus exhibits good mechanical physical properties. When the polyolefin resin (A) contains a plural kind of polyolefin resins, each of the polyolefin resins is preferred to exhibit the MFR falling within the above range.

When the resin composition according to the present invention is used as a hot-melt adhesive, it is required to be quickly melted at 210 to 240°C for molding the resin composition while suppressing thermal degradation of resin as much as possible. Therefore, the upper limit of the melting point of the polyolefin resin (A) is desired to be 210°C. The upper limit is preferably 200°C or lower and is more preferably 190°C or lower. The lower limit is preferably 90°C or higher, is more preferably 100°C or higher, is further preferably 110°C or higher, and is especially preferably 120°C or higher. The melting point of the polyolefin resin (A) should be 5 to 10°C or more higher than the heat-resistance temperature required in the intended use. When the polyolefin resin (A) contains a plural kind of polyolefin resins, each of the polyolefin resins is preferred to have the melting point falling within the above range.

When the total content of the polyolefin resin (A), the acid-modified polyolefin resin (B), the styrene-isobutylene-styrene block copolymer (C), and the adhesion imparting agent (D) is taken as 100 parts by mass, the content of the polyolefin resin (A) in the resin composition according to the present invention is preferably 38 parts by mass or more, is more preferably 40 parts by mass or more, is further preferably 42 parts by mass or more, and is especially preferably 48 parts by mass or more. Also, the content of the polyolefin resin (A) in the resin composition according to the present invention is preferably 70 parts by mass or less, is more preferably 68 parts by mass or less, and is further preferably 63 parts by mass or less. When the content ratio of the polyolefin resin (A) is more than or equal to the above lower limit value, particularly good water vapor barrier properties may be imparted to the resin composition. When the content ratio is less than or equal to the above upper limit value, the resin composition may exhibit good thermal shock resistance.

<Acid-modified polyolefin resin (B)>

The resin composition according to the present invention contains an acid-modified polyolefin resin (B). By blending the acid-modified polyolefin resin (B), good dispersibility can be achieved among the polyolefin resin (A), the acid-modified polyolefin resin (B), the styrene-isobutylene-styrene block copolymer (C), the adhesion imparting agent (D), and the filler (E). As a result, appropriate adhesiveness, thermal shock resistance, and water vapor barrier properties can be imparted to the resin composition. The acid-modified polyolefin resin (B) is not particularly limited, and only has to be a resin that contains a polyolefin segment and a carboxylic acid segment. Examples of the acid-modified polyolefin resin (B) include ethylene-unsaturated carboxylic acid copolymers such as an ethylene-vinyl acetate-maleic anhydride ternary copolymer and an ethylene-ethyl acrylate-maleic anhydride ternary copolymer; and unsaturated carboxylic acid graft-modified polyolefin resins such as maleic anhydride graft-modified polypropylene and a maleic anhydride graft-modified propylene-$\alpha$-olefin copolymer. Among these examples, an unsaturated carboxylic acid graft-modified polyolefin resin is preferable, and an unsaturated carboxylic acid graft-modified polyolefin resin obtained using maleic anhydride as the unsaturated carboxylic acid used in the graft modification is more preferable.

The acid-modified polyolefin resin (B) used in the present invention preferably has a melting point of 100°C or higher, more preferably has a melting point of 110°C or higher, and further preferably has a melting point of 120°C or higher. Also, the acid-modified polyolefin resin (B) used in the present invention preferably has a melting point of 160°C or lower and more preferably has a melting point of 150°C or lower. When the melting point of the acid-modified polyolefin resin (B) is more than or equal to the above lower limit value, the resin composition may exhibit good heat resistance, and when the melting point is less than or equal to the above upper limit value, the resin composition may exhibit good flowability during molding.

When the total content of the polyolefin resin (A), the acid-modified polyolefin resin (B), the styrene-isobutylene-styrene block copolymer (C), and the adhesion imparting agent (D) is taken as 100 parts by mass, the content of the acid-modified polyolefin resin (B) in the resin composition according to the present invention is preferably 1 part by mass or more, is more preferably 3 parts by mass or more, and is further preferably 5 parts by mass or more. Also, the content of the acid-modified polyolefin resin (B) in the resin composition according to the present invention is preferably 22 parts by mass or less, is more preferably 20 parts by mass or less, is further preferably 15 parts by mass or less, and is especially preferably 10 parts by mass or less. When the content ratio of the acid-modified polyolefin resin (B) is more than or equal to the above lower limit value, the dispersibility among the polyolefin resin (A), the acid-modified polyolefin resin (B), the styrene-isobutylene-styrene block copolymer (C), the adhesion imparting agent (D), and the filler (E) may be good. When the content ratio of the acid-modified polyolefin resin (B) is less than or equal to the above upper limit value, the resin composition may exhibit good mechanical properties.

<Styrene-isobutylene-styrene block copolymer (C)>

The resin composition according to the present invention contains a styrene-isobutylene-styrene block copolymer (C). By blending the styrene-isobutylene-styrene block copolymer (C), appropriate thermal shock resistance can be imparted to the resin composition. The styrene-isobutylene-styrene block copolymer (C) used in the present invention is not particularly limited, but preferably has a triblock structure from the viewpoint of the water vapor barrier properties and the thermal shock resistance.

The content of styrene in the styrene-isobutylene-styrene block copolymer (C) used in the present invention is preferably 10 wt% or more, more preferably 13 wt% or more, and further preferably 15 wt% or more. Also, the content of styrene in the styrene-isobutylene-styrene block copolymer (C) used in the present invention is preferably 30 wt% or less, more preferably 25 wt% or less, and further preferably 20 wt% or less. When the content of styrene in the styrene-isobutylene-styrene block copolymer (C) is more than or equal to the above lower limit value, the resin composition may exhibit good heat resistance. When the content of styrene in the styrene-isobutylene-styrene block copolymer (C) is less than or equal to the above upper limit value, the resin composition may increase its flexibility and thus may exhibit good thermal shock resistance.

When the total content of the polyolefin resin (A), the acid-modified polyolefin resin (B), the styrene-isobutylene-styrene block copolymer (C), and the adhesion imparting agent (D) is taken to 100 parts by mass, the content of the styrene-isobutylene-styrene block copolymer (C) in the resin composition according to the present invention needs to be 8 parts by mass or more. The content of the styrene-isobutylene-styrene block copolymer (C) in the resin composition according to the present invention is preferably 10 parts by mass or more, is more preferably 12 parts by mass or more, is further preferably 15 parts by mass or more, and is especially preferably 18 parts by mass or more. Also, the content of the styrene-isobutylene-styrene block copolymer (C) in the resin composition according to the present invention needs to be 32 parts by mass or less. The content of the styrene-isobutylene-styrene block copolymer (C) in the resin composition according to the present invention is preferably 30 parts by mass or less, is more preferably 28 parts by mass or less, is further preferably 25 parts by mass or less, and is especially preferably 22 parts by mass or less. When the content ratio of the styrene-isobutylene-styrene block copolymer (C) is more than or equal to the above lower limit value, the resin composition exhibits good thermal shock resistance. When the content ratio of the styrene-isobutylene-styrene block copolymer (C) is less than or equal to the above upper limit value, the resin composition increases its flowability and thus exhibits good moldability.

<Adhesion imparting agent (D)>

The resin composition according to the present invention contains an adhesion imparting agent (D). By blending the adhesion imparting agent (D), good adhesiveness can be imparted to the resin composition when the resin composition is used as a sealing material; and further, the flowability of the resin composition can be appropriately improved. The adhesion imparting agent (D) used in the present invention is not particularly limited, and it is possible to use, for example, a phenolic compound, a xylene-modified phenolic resin, a terpene-modified phenolic resin, or a hydrogenated terpene-modified phenolic resin obtained by a hydrogenation treatment of a terpene-modified phenolic resin. Particularly, from the viewpoint of compatibility with the polyolefin resin (A), a xylene-modified phenolic resin or a terpene-modified phenolic resin is preferable.

The adhesion imparting agent (D) used in the present invention preferably contains a hydroxyl group. When the adhesion imparting agent (D) contains a hydroxyl group, the wettability to a base material can be improved, whereby the adhesiveness to the base material, and the insulating properties are improved. The adhesion imparting agent (D) preferably has a hydroxyl value of 1 mgKOH/g or more, more preferably has a hydroxyl value of 30 mgKOH/g or more, and further preferably has a hydroxyl value of 50 mgKOH/g or more. The adhesion imparting agent (D) preferably has a hydroxyl value of 100 mgKOH/g or less, more preferably has a hydroxyl value of 90 mgKOH/g or less, further preferably has a hydroxyl value of 80 mgKOH/g or less, and especially preferably has a hydroxyl value of 70 mgKOH/g or less. When the hydroxyl value of the adhesion imparting agent (D) is of less than or equal to the above upper limit value, the adhesiveness can be improved while water vapor transmission rate can be appropriately maintained.

The hydroxyl value can be measured, for example, by potentiometric titration stipulated in JIS K 0070: 1992.

When the total content of the polyolefin resin (A), the acid-modified polyolefin resin (B), the styrene-isobutylene-styrene block copolymer (C), and the adhesion imparting agent (D) is taken as 100 parts by mass, the content of the adhesion imparting agent (D) in the resin composition according to the present invention needs to be 8 parts by mass or more. The content of the adhesion imparting agent (D) in the resin composition according to the present invention is preferably 10 parts by mass or more, is more preferably 13 parts by mass or more, and is further preferably 15 parts by mass or more. Also, the content of the adhesion imparting agent (D) in the resin composition according to the present invention needs to be 27 parts by mass or less, is preferably 25 parts by mass or less, is more preferably 22 parts by mass or less, and is further preferably 20 parts by mass or less. When the content of the adhesion imparting agent (D) is within the above range, the resin composition can exert particularly good adhesiveness. Further, it is possible to suppress decrease of the flexibility and decrease of the adhesiveness due to embrittlement.

<Filler (E)>

The resin composition according to the present invention contains a filler (E). By blending the filler (E), good water vapor barrier properties can be imparted to the resin composition. The filler (E) used in the present invention is not particularly limited, and it is possible to use glass beads, calcium carbonate, kaolin, talc, glass fibers, carbon fibers, clay, or the like. The filler (E) used in the present invention is plate-shaped. By making the shape of the filler (E) plate-like, particularly the water vapor barrier properties can be improved. Here, the filler being "plate-shaped" refers to the filler that has a shape like a plate having extremely small height relative to the width and the depth of the filler. The filler (E) preferably has an aspect ratio, i.e., a ratio between a minor diameter and a major diameter (major diameter/minor diameter), of 3 to 500. The filler (E) may have an aspect ratio of 5 or more, 10 or more, 20 or more, 50 or more, and 100 or more. The filler (E) may have an aspect ratio of 450 or less, 400 or less, 350 or less, 300 or less, and 200 or less. The aspect ratio of the filler (E) can be determined by means such as automatic area measurement of an image obtained by observing the filler (E) with an electronic microscope. When the filler (E) has an excessively low aspect ratio, the water vapor barrier properties may decrease. When the filler (E) has an excessively high aspect ratio, the dispersibility may deteriorate, thereby the mechanical properties may be decreased.

When the total content of the polyolefin resin (A), the acid-modified polyolefin resin (B), the styrene-isobutylene-styrene block copolymer (C), and the adhesion imparting agent (D) is taken as 100 parts by mass, the content of the filler (E) in the resin composition according to the present invention needs to be 1 part by mass or more, is preferably 2 parts by mass or more, and is more preferably 4 parts by mass or more. When the content of the filler (E) is more than or equal to the above lower limit value, the resin composition exhibits good water vapor barrier properties. Further, the resin composition may exhibit good mechanical properties, thereby the shear adhesion strength may be improved. The content of the filler (E) needs to be 13 parts by mass or less, is preferably 10 parts by mass or less, and is more preferably 8 parts by mass or less. When the content of the filler (E) is less than or equal to the above upper limit value, the resin composition exhibits good adhesiveness.

The filler (D) in the resin composition according to the present invention may have a particle size (D50) of, for example, 1 to 50 $\mu$m. The particle size (D50) can be measured, for example, by a laser diffraction method or a dynamic light scattering method.

<Resin composition>

The resin composition according to the present invention contains at least the polyolefin resin (A); the acid-modified polyolefin resin (B); the styrene-isobutylene-styrene block copolymer (C); the adhesion imparting agent (D); and the filler (E). The resin composition may also contain various additives such as an antioxidant.

The resin composition according to the present invention preferably exhibits a melt viscosity at 240°C of 5 to 1500 dPa•s. The melt viscosity of the resin composition can be achieved by appropriately adjusting the type and the blending ratio of the polyolefin resin (A), the acid-modified polyolefin resin (B), the styrene-isobutylene-styrene block copolymer (C), the adhesion imparting agent (D), and the filler (E). Here, the melt viscosity at 240°C is a value obtained through the measurement performed as follows. Firstly, the resin composition is dried to a moisture percentage of 0.1% or less. Next, the resin composition is heated and stabilized at 240°C with a flow tester (model CFT-500C) manufactured by SHIMADZU CORPORATION. Then, the resin composition is allowed to pass through a 10-mm-thick die having a pore diameter of 1.0 mm at a pressure of 98 N/cm$^2$. At that time, viscosity is measured. This measured value of viscosity is adopted as the melt viscosity at 240°C. By using the resin composition exhibiting a melt viscosity of 1500 dPa•s or less and preferably 1000 dPa•s or less, a product exhibiting excellent electrically insulating properties can be obtained at a relatively low injection pressure of 0.1 to 20 MPa. Also, the properties of the product are not damaged. From the viewpoint of operation of injecting the resin composition, the melt viscosity at 240°C is preferably lower, but in consideration of the adhesiveness and the coagulation power of the resin composition, the lower limit of the melt viscosity is preferably 5 dPa•s or more, is further preferably 10 dPa•s or more, is more preferably 30 dPa•s or more, and is most preferably 50 dPa•s or more.

The resin composition according to the present invention may further contain an antioxidant. The antioxidant used in the present invention is not particularly limited as long as the antioxidant can prevent oxidation of the polyolefin resin (A). It is possible to use a hindered phenol-based antioxidant, a phosphorus-based antioxidant, a thioether-based antioxidant, or the like. Examples of the hindered phenol-based antioxidant include 1,3,5-tris(3,5-di-t-butyl-4-hydroxybenzyl)isocyanurate, 1,1,3-tri(4-hydroxy-2-methyl-5-t-butylphenyl)butane, 1,1-bis(3-t-butyl-6-methyl-4-hydroxyphenyl) butane, 3,5-bis(1,1-dimethylethyl)-4-hydroxy-benzenepropanoic acid, pentaerytrityltetrakis(3,5-di-t-butyl-4-hydroxyphenyl)propionate, 3-(1,1-dimethylethyl)-4-hydroxy-5-methyl-benzenepropanoic acid, 3,9-bis[1,1-dimethyl-2-[(3-t-butyl-4-hydroxy-5-methylphenyl)propionyloxy]ethyl]-2,4,8,10-tetraoxaspiro[5.5]undecane, and 1,3,5-trimethyl-2,4,6-tris(3',5'-di-t-butyl-4'-hydroxybenzyl)benzene. Examples of the phosphorus-based antioxidant include 3,9-bis(p-nonylphenoxy)-2,4,8,10-tetraoxa-3,9-diphosphaspiro[5.5]undecane, 3,9-bis(octadecyloxy)-2,4,8,10-tetraoxa-3,9-diphosphaspiro[5.5]undecane, tri(monononylphenyl) phosphite, triphenoxyphosphine, isodecyl phosphite, isodecyl phenyl phosphite, diphenyl 2-ethylhexyl phosphite, dinonylphenyl bis(nonylphenyl) ester phosphorus acid, 1,1,3-tris(2-methyl-4-ditridecylphosphite-5-t-butylphenyl)butane, tris(2,4-di-t-butylphenyl) phosphite, pentaerythritol bis(2,4-di-t-butylphenylphosphite), 2,2'-methylene bis(4,6-di-t-butylphenyl) 2-ethylhexyl phosphite, and bis(2,6-di-t-butyl-4-methylphenyl)pentaerythritol diphosphite. Examples of the thioether-based antioxidant include 4,4'-thiobis[2-t-butyl-5-methylphenol] bis [3-(dodecylthio)propionate], thiobis[2-(1,1-dimethylethyl)-5-methyl-4,1-phenylene] bis[3-(tetradecylthio)-propionate], pentaerythritoltetrakis(3-n-dodecylthiopropionate), and bis(tridecyl)thiodipropionate. These antioxidants can be used alone or in combination thereof.

When the total content of the polyolefin resin (A), the acid-modified polyolefin resin (B), the styrene-isobutylene-styrene block copolymer (C), and the adhesion imparting agent (D) is taken as 100 parts by mass, the content of the antioxidant in the resin composition according to the present invention is preferably 0.1 part by mass or more, is more preferably 0.2 part by mass or more, and is further preferably 0.3 part by mass or more. When the content of the antioxidant is excessively small, the long-term durability under high temperatures may be adversely affected. Also, the content of the antioxidant in the resin composition according to the present invention is preferably 5 parts by mass or less, is more preferably 3 parts by mass or less, and is further preferably 1 part by mass or less. When the content of the antioxidant is excessively large, the adhesiveness and the like may be adversely affected.

There is no problem even if the resin composition according to the present invention has blended therein another resin, such as a polyamide, polycarbonate, acrylic, and ethylene vinylacetate, that does not correspond to any of the polyolefin resin (A), the acid-modified polyolefin resin (B), the styrene-isobutylene-styrene block copolymer (C), the adhesion imparting agent (D), and the filler (E), as long as the effects of the present invention are not impaired. Also, there is no problem even if the resin composition according to the present invention has blended therein a curing agent such as an isocyanate compound and melamine, a pigment such as carbon black and titanium oxide, or a flame retardant such as antimony trioxide and polystyrene bromide, as long as the effects of the present invention are not impaired. By blending these components, the adhesiveness, the flexibility, the durability, and the like may be improved. When these components are blended, the content of the polyolefin resin (A) is preferably 30 to 70 wt% and is more preferably 40 to 60 wt% relative to the whole of the resin composition according to the present invention. When the content of the polyolefin resin (A) is excessively small, excellent water vapor barrier properties and durability that the polyolefin resin (A) itself has tend to be decreased. When the content of the polyolefin resin (A) is excessively large, the flexibility and the adhesiveness inherent to the resin composition tend to be decreased.

When the resin composition according to the present invention is required to further have weather resistance, it is preferable to add a light stabilizer to the resin composition. Examples of the light stabilizer include a benzotriazole-based light stabilizer, a benzophenone-based light stabilizer, a hindered amine-based light stabilizer, a nickel-based light stabilizer, and a benzoate-based light stabilizer. Examples of the benzotriazole-based light stabilizer include 2-(3,5-di-tert-amyl-2'hydroxyphenyl)benzotriazole, 2-(2-hydroxy-5-tert-octylphenyl)benzotriazole, 2-(2'-hydroxy-3'-tert-butyl-5'-methylphenyl)-5-chlorobenzotriazole, 2-(2H-benzotriazole-2-yl)-p-cresol, 2-(2'-hydroxy-5'-methylphenyl)-benzotriazole, 2,4-di-tert-butyl-6-(5-chlorobenzotriazole-2-yl)phenol, and 2-[2-hydroxy-3,5-di(1,1-dimethylbenzyl)]-2H-benzotriazole. Examples of the benzophenone-based light stabilizer include 2-hydroxy-4-(octyloxy)benzophenone, 2,4-dihydroxybenzophenone, 2-hydroxy-4-methoxybenzophenone, 2-hydroxy-4-methoxybenzophenone, 2-hydroxy-4-methoxybenzophenone-5-sulfonic acid, 2-hydroxy-4-n-dodecyloxybenzophenone, bis(5-benzoyl-4-hydroxy-2-methoxyphenyl) methane, 2-2'-dihydroxy-4-methoxybenzophenone, and 2,2'-dihydroxy-4,4'-dimethoxybenzophenone. Examples of the hindered amine-based light stabilizer include bis(2,2,6,6-tetramethyl-4-piperidyl) sebacate, a dimethyl succinate•1-(2-hydroxyethyl)-4-hydroxy-2,2,6,6-tetramethylpiperidine polycondensation product, poly[{6-(1,1,3,3-tetramethylbutyl)amino-1,3,5-triazine-2,4-diyl}{(2,2,6,6-tetramethyl-4-piperidyl)imino}hexamethylene(2,2,6,6-tetramethyl-4-piperidyl)imino}], 1,3,5-tris(3,5-di-tert-butyl-4-hydroxybenzyl)-s-triazine-2,4,6(1H,3H,5H)trione, and tris(4-tert-butyl-3-hydroxy-2,6-dimethylbenzyl)-s-triazine-2,4,6-(1H,3H,5H)trione. Examples of the nickel-based light stabilizer include [2,2'-thio-bis(4-tert-octylphenolate)]-2-ethylhexylamine-nickel-(II), nickel dibutyldithiocarbamate, and [2',2'-thio-bis(4-tert-octylphenolate)ln-butylamine-nickel. Examples of the benzoate-based light stabilizer include 2,4-di-t-butylphenyl-3,5'-di-tert-butyl-4'-hydroxybenzoate. These light stabilizers can be used alone or in combination thereof. When the light stabilizer is added, the addition amount thereof is preferably 0.1 mass% or more and 5 mass% or less relative to the whole of the resin composition. When the addition amount of the light stabilizer is less than 0.1 mass%, the weather resistance effect may be deficient. When the addition amount of the light stabilizer is more than 5 mass%, the adhesiveness and the like may be adversely affected.

<Hot-melt adhesive composition>

The resin composition according to the present invention can be used as a hot-melt adhesive composition. The hot-melt adhesive composition can suitably be used as, for example, a sealing material for electric/electronic components. A specific example of a method of using the resin composition according to the present invention includes injecting the resin composition according to the present invention into a mold in which a product desired to be waterproofed is set, and thereby obtaining a molded article having the sealed product. More specifically, when a screw-type hot-melt mold process applicator is used, the resin composition is heated and melted at around 180 to 250°C and injected into a mold through an injection nozzle, and then after a certain cooling time, a molded article can be obtained by removing the mold from the molded article.

The model of the hot-melt mold process applicator is not particularly limited, and examples thereof include vertical extrusion molding machine IMC-18F9 manufactured by Imoto machinery Co., LTD. and compact hybrid type vertical injection molding machines STX20 and THX5S1VN manufactured by NISSEI PLASTIC INDUSTRIAL CO., LTD.

Examples

In order to illustrate the present invention in detail, Examples and Comparative Examples will be shown below although the present invention shall not be limited at all by those Examples. Incidentally, each of the measured values mentioned in Examples and Comparative Examples was measured by the following methods.

<Measurement of melting point>

A measurement sample (the polyolefin resin (A) or the acid-modified polyolefin resin (B)) (5 mg) was put in an aluminum pan in differential scanning calorimeter "DSC220 model" manufactured by Seiko Instruments & Electronics Ltd., sealed therein with the lid pressed against the aluminum pan, and once heated to 230°C at a temperature rise rate of 20°C/min and thus melted. Next, the sample was cooled to -130°C at 20°C/min, using liquid nitrogen, held for 5 minutes, and then measured from -130°C to 230°C at a temperature rise rate of 20°C/min. On the curve obtained, a local minimum point ($\times$ mark in the chart) of an endothermic peak illustrated in FIG. 1 was used as a melting point (Tm).

<Hydroxyl value>

The hydroxyl value of the adhesion imparting agent (D) was measured by potentiometric titration stipulated in JIS K 0070: 1992.

<Melt viscosity>

The blending raw materials or resin composition dried to a moisture percentage of 0.1% or less was charged into a cylinder in the center of a heater, set to 240°C, of a flow tester (CFT-500C model) manufactured by SHIMADZU CORPORATION. One minute after the charge, load was applied to the sample via a plunger, and the sample, which had been melted, was extruded from a die (pore diameter: 1.0 mm, thickness: 10 mm) at the bottom of the cylinder at a pressure of 98 N/cm$^2$. The lowered distance and the lowering time of the plunger were recorded, and the melt viscosity was calculated. From the value of the melt viscosity, the melting properties (flowability) were evaluated according to the following evaluation criteria.

Evaluation criteria

○: The melt viscosity at 240°C was 5 dPa•s or more and less than 1000 dPa•s
△: The melt viscosity at 240°C was 1000 dPa•s or more and less than 1500 dPa•s
✕: The melt viscosity at 240°C was 1500 dPa•s or more

<Water vapor barrier properties>

The resin composition was heat-pressed by a heat pressing machine (SA-303 manufactured by TESTER SANGYO CO., LTD.), and thereby a film having a thickness of about 120 μm was prepared.
The heat pressing conditions were set to a temperature of 200°C, a pressing pressure of 10 MPa, and a pressing time of 30 seconds. The heat-pressed film was, with a cutout machine, cut out into a test piece based on JIS Z0208: 1976. Next, the film was set in a jig specified in JIS Z0208: 1976, and left to stand still in a 25°C 90% relative humidity (RH) environment for a total of 96 hours.
The sample was taken out and measured for weight 24 hours, 48 hours, 72 hours, and 96 hours after the start of the test. The water vapor transmission rate (water vapor barrier properties) was calculated, from the weight of water absorbed by calcium chloride, every 24 hours, i.e., (1) between after 24 hours and after 48 hours, (2) between after 48 hours and after 72 hours, and (3) between after 72 hours and after 96 hours. The average value of the values of the three water vapor transmission rates was used as the water vapor transmission rate. The water vapor transmission rate was determined by the following equation. The water vapor transmission area refers to the area of the film prepared from the resin composition.

Water vapor transmission rate (g/(m$^2$•24h)) = (240 $\times$ m)/(t $\times$ s)

m: The total of the mass (mg) increased in the interval between the last two weight measurement for the test

t: The time of the interval between the last two weight measurement for the test = 24 h

s: Water vapor transmission area ($cm^2$)

Evaluation criteria

○○: Water vapor transmission rate was less than 0.5 ($g/(m^2 \cdot 24h)$)

○: Water vapor transmission rate was 0.5 ($g/(m^2 \cdot 24h)$) or more and less than 1.0 ($g/(m^2 \cdot 24h)$)

△: Water vapor transmission rate was 1.0 ($g/(m^2 \cdot 24h)$) or more and less than 1.5 ($g/(m^2 \cdot 24h)$)

×: Water vapor transmission rate was 1.5 ($g/(m^2 \cdot 24h)$) or more

<Adhesiveness test (T-peel adhesion strength)> Method for preparing T-peel adhesion test piece

A base material (aluminum substrate: A5052 (thickness: 0.1 mm)) was cut into a size of 40 mm × 25 mm, and had the surface thereof wiped with acetone so as to remove oil. Next, the resin composition was heat-pressed by a heat pressing machine (SA-303 manufactured by TESTER SANGYO CO., LTD.), and thereby a film having a thickness of about 200 μm was prepared. The heat pressing conditions were set to a temperature of 200°C, a pressing pressure of 6 MPa, and a pressing time of 10 seconds. A heat-pressed film was cut into a size of 20 mm × 25 mm, and two of the cut films were stacked on top of another, sandwiched between the aluminum base materials cut out in advance, and heat-sealed by a heat seal tester (TP-701-B manufactured by TESTER SANGYO CO., LTD.). The heat sealing conditions were set to a temperature of 220°C, a pressing pressure of 0.4 MPa, and a pressing time of 30 seconds. Thus, a T-peel adhesion test piece wherein the films made from the resin composition was sandwiched between the aluminum base materials, was obtained.

Method for T-peel adhesion strength test

The T-peel adhesion strength test piece was set in autograph (AG-IS manufactured by SHIMADZU CORPORATION), with the aluminum base materials held in chucks. Next, the film layers made from the resin composition were peeled from one another through T-peeling in a 25°C environment or 90°C environment, and the T-peel adhesion strength was measured. The tensile rate was 300 mm/min.

Evaluation criteria

○: T-peel adhesion strength was 70 N/25 mm or more

△: T-peel adhesion strength was 40 N/25 mm or more and less than 70 N/25 mm

×: T-peel adhesion strength was less than 40 N/25 mm

<Thermal shock resistance test>

Method for preparing thermal shock resistance test sample

A base material (aluminum substrate: A5052 (40 mm × 30 mm × 5 mm thickness)) had one 30-mm-long side thereof subjected to cutting processing into 30 mm × 1 mm × 1 mm, the location of the cutting processing was subjected to blast processing to an Rz (surface roughness) of about 5 μm, and the surface was wiped with acetone so as to remove oil. Next, the base material was set in a prescribed mold, and the resin composition was, through injection molding using an injection molding machine (compact hybrid type vertical injection molding machine THX5S1VN manufactured by NISSEI PLASTIC INDUSTRIAL CO., LTD.), injection molded to the part of the cutting processing and charged into the mold. The injection molding conditions were set to a temperature of 240°C, a mold temperature of 80°C, an injection rate of 30 mm/s, a holding pressure of 50 MPa, an injection time of 10 seconds, a pressure holding time of 20 seconds, and a pressing time of 10 seconds. Thereby, a thermal shock resistance test sample in which the resin composition adhered to the cut part of the aluminum base material was obtained.

Method for thermal shock resistance test

The thermal shock resistance test sample was tested in a -45°C and 95°C alternating (1 cycle: -45°C for 9 minutes and 95°C for 10 minutes) environment, using a thermal shock test chamber (TSE-11 manufactured by ESPEC CORP.). The test was performed up to 2000 cycles.

Evaluation criteria

○: After 2000 cycles, the resin composition was neither cracked nor peeled from the aluminum base material
×: After 2000 cycles, the resin composition was cracked or peeled from the aluminum base material

<Examples 1 to 9 and Comparative Examples 1 to 8>

Resin compositions 1 to 17 were obtained by melt-kneading the polyolefin resin (A), the acid-modified polyolefin resin (B), the styrene-isobutylene-styrene block copolymer (C) (a styrene-ethylene-butylene-styrene block copolymer was used in the resin composition 17), the adhesion imparting agent (D), and the filler (E) at the ratio shown in Table 1, using a twin screw extruder, at a die temperature of 160°C to 220°C. The resin compositions were evaluated for melt viscosity, water vapor barrier properties, T-peel adhesion strength, and thermal shock resistance by the methods described separately. Table 1 below shows the evaluation results.

[Table 1]

| Examples | | | Example 1 | Example 2 | Example 3 | Example 4 | Example 5 | Example 6 |
|---|---|---|---|---|---|---|---|---|
| Resin compositions | | | Composition 1 | Composition 2 | Composition 3 | Composition 4 | Composition 5 | Composition 6 |
| Combination (wt%) | Polyolefin resin (A) | Polyolefin (A-1) | 65 | 35 | 25 | 25 | 25 | 25 |
| | | Polyolefin (A-2) | | | | | | |
| | | Polyolefin (A-3) | | | 30 | 20 | 25 | 25 | 25 |
| | Acid modified polyolefin resin (B) | Maleic anhydride acid modified polyolefin (B-1) | 5 | 5 | 5 | 5 | 5 | 5 |
| | Styrene-isobutylene-styrene block copolymer (C) | Styrene-isobutylene-styrene (C-1) | 10 | 10 | 30 | | | |
| | | Styrene-isobutylene-styrene (C-2) | | | | 20 | 20 | 20 |
| | Adhesion imparting agent (D) | Adhesion imparting agent (D-1) | 20 | 20 | 20 | 25 | 25 | 25 |
| | | Adhesion imparting agent (D-2) | | | | | | |
| | Filler (E) | Filler (E-1) | 5 | 5 | 5 | 5 | 3 | 10 |
| | | Filler (E-2) | | | | | | |
| | | Filler (E-3) | | | | | | |
| | Styrene-ethylene-butylene-styrene block copolymer (F) | Styrene-ethylene-butylene-styrene block copolymer (F-1) | | | | | | |
| Properties | Melt viscosity (dPa·s) | @240℃ | 970 ○ | 1006 △ | 708 ○ | 1391 △ | 1321 △ | 1452 △ |
| | Water vapor transmission rate (g/(m²·24h)) | 25℃90%RH | 0.69 ○ | 0.71 ○ | 0.66 ○ | 0.49 ○○ | 1.05 △ | 0.45 ○○ |
| | T-peel adhesion strength (N/25mm) | @25℃ | 62 △ | 77 ○ | 54 △ | 88 ○ | 94 ○ | 68 △ |
| | | @90℃ | 48 △ | 53 △ | 40 △ | 51 △ | 60 △ | 44 △ |
| | Thermal shock resistance | -45℃⇔95℃ | ○ | ○ | ○ | ○ | ○ | ○ |

| Examples | | | Example 7 | Example 8 | Example 9 | Comparative Example 1 | Comparative Example 2 | Comparative Example 3 |
|---|---|---|---|---|---|---|---|---|
| Resin compositions | | | Composition 7 | Composition 8 | Composition 9 | Composition 10 | Composition 11 | Composition 12 |
| Combination (wt%) | Polyolefin resin (A) | Polyolefin (A-1) | 20 | 25 | 20 | 25 | 25 | 25 |
| | | Polyolefin (A-2) | 20 | 25 | 20 | | | |
| | | Polyolefin (A-3) | | | | 25 | 25 | 25 |
| | Acid-modified polyolefin resin (B) | Maleic anhydride acid-modified polyolefin (B-1) | 20 | 20 | 20 | 5 | 5 | 5 |
| | Styrene-isobutylene-styrene block copolymer (C) | Styrene-isobutylene-styrene (C-1) | 20 | 20 | 20 | | | |
| | | Styrene-isobutylene-styrene (C-2) | | | | 20 | 20 | 20 |
| | Adhesion imparting agent (D) | Adhesion imparting agent (D-1) | 20 | 10 | | 25 | 25 | 25 |
| | | Adhesion imparting agent (D-2) | | | 20 | | | |
| | Filler (E) | Filler (E-1) | 5 | 5 | | | 15 | |
| | | Filler (E-2) | | | 5 | | | |
| | | Filler (E-3) | | | | | | 5 |
| | Styrene-ethylene-butylene-styrene block copolymer (F) | Styrene-ethylene-butylene-styrene block copolymer (F-1) | | | | | | |
| Properties | Melt viscosity (dPa·s) | @240℃ | 553 ○ | 936 ○ | 990 ○ | 1204 △ | 1521 × | 1381 △ |
| | Water vapor transmission rate (g/(m²·24h)) | 25℃90%RH | 0.93 ○ | 1.46 △ | 1.23 △ | 1.69 × | 0.44 ○ | 1.54 × |
| | T-peel adhesion strength (N/25mm) | @25℃ | 54 △ | 129 ○ | 61 △ | 91 ○ | 71 ○ | 81 ○ |
| | | @90℃ | 70 ○ | 138 ○ | 74 ○ | 60 △ | 39 × | 43 △ |
| | Thermal shock resistance | -45℃⇔95℃ | ○ | ○ | ○ | ○ | × | ○ |

| Examples | | Comparative Example 4 | Comparative Example 5 | Comparative Example 6 | Comparative Example 7 | Comparative Example 8 |
|---|---|---|---|---|---|---|
| Resin compositions | | Composition 13 | Composition 14 | Composition 15 | Composition 16 | Composition 17 |
| Polyolefin resin (A) | Polyolefin (A-1) | 30 | 15 | 35 | 15 | 25 |
| | Polyolefin (A-2) | 25 | 15 | 35 | 15 | |
| | Polyolefin (A-3) | | | | | 25 |
| Acid-modified polyolefin resin (B) | Maleic anhydride acid-modified polyolefin (B-1) | 20 | 20 | 5 | 5 | 5 |
| Styrene-isobutylene-styrene block copolymer (C) | Styrene-isobutylene-styrene (C-1) | | 20 | | | |
| | Styrene-isobutylene-styrene (C-2) | 20 | | | 40 | |
| Adhesion imparting agent (D) | Adhesion imparting agent (D-1) | 5 | 30 | 25 | 25 | 25 |
| | Adhesion imparting agent (D-2) | | | | | |
| Filler (E) | Filler (E-1) | 5 | 5 | 5 | 5 | 5 |
| | Filler (E-2) | | | | | |
| | Filler (E-3) | | | | | |
| Styrene-ethylene-butylene-styrene block copolymer (F) | Styrene-ethylene-butylene-styrene block copolymer (F-1) | | | | | 20 |
| Melt viscosity (dPa·s) | @240℃ | 1559 × | 281 ○ | 732 ○ | 1435 △ | 1100 △ |
| Water vapor transmission rate (g/(m²·24h)) | 25℃90%RH | 1.24 △ | 1.03 △ | 0.29 ○○ | 1.24 △ | 2.13 × |
| T peel adhesion strength (N/25mm) | @25℃ | 38 × | 14 × | 72 ○ | 76 ○ | 74 ○ |
| | @90℃ | 32 × | 18 × | 46 △ | 25 × | 38 × |
| Thermal shock resistance | -45℃⇔95℃ | ○ | ○ | × | ○ | ○ |

The polyolefin resins, the acid-modified polyolefin resin, the styrene-isobutylene-styrene block copolymers, the adhesion imparting agents, and the fillers shown in Table 1 are as follows.

Polyolefin resin (A-1): J107G, manufactured by Prime Polymer Co., Ltd., homopolypropylene resin, melting point: 165°C, density: 0.90 g/cm$^3$

Polyolefin resin (A-2): EUL731, manufactured by SUMITOMO CHEMICAL COMPANY, LIMITED, ethylene-$\alpha$-olefin copolymer, melting point: 113°C to 117°C, density: 0.90 g/cm$^3$

Polyolefin resin (A-3): TAFMER PN-20300, manufactured by Mitsui Chemicals, Inc., propylene-$\alpha$-olefin copolymer, melting point: 160°C, density: 0.87 g/cm$^3$

Acid-modified polyolefin resin (B-1): PMA H1100P, manufactured by TOYOBO Co., Ltd., maleic anhydride graft-modified polypropylene resin, melting point: 147°C, molecular weight (Mw): 74000

Styrene-isobutylene-styrene block copolymer (C-1): SIBSTAR 062T, manufactured by KANEKA CORPORATION, styrene-isobutylene-styrene block copolymer, content of styrene: 23 wt%, MFR: 10g/10min (230°C, 2.16kg), density: 0.95 g/cm$^3$

Styrene-isobutylene-styrene block copolymer (C-2): SIBSTAR 102T, manufactured by KANEKA CORPORATION, styrene-isobutylene-styrene block copolymer, content of styrene: 15 wt%, MFR: 0.6g/10min (230°C, 2.16kg), density: 0.94 g/cm$^3$

Adhesion imparting agent (D-1): YS POLYSTER T160, manufactured by YASUHARA CHEMICAL CO., LTD., terpene-modified phenolic resin, hydroxyl value: 60mgKOH/g

Adhesion imparting agent (D-2): YS POLYSTER G150, manufactured by YASUHARA CHEMICAL CO., LTD., terpene-modified phenolic resin, hydroxyl value: 140mgKOH/g

Filler (E-1): K-1, manufactured by NIPPON TALC Co., Ltd., talc, plate shape, particle size (D50): 8.0 $\mu$m, aspect ratio: 3 to 10

Filler (E-2): I.44P, manufactured by Volclay Japan Co., Ltd., montmorillonite, plate shape, size: 14 $\mu$m to 18$\mu$m, aspect ratio: 100 to 500

Filler (E-3): UBS-0005E, manufactured by UNITIKA LTD., glass beads, spherical shape, particle size: 5 $\mu$m or less, aspect ratio: 1

Styrene-ethylene-butylene-styrene block copolymer (F-1): TUFTEC H1043, manufactured by Asahi Kasei Corp., styrene-ethylene-butylene-styrene block copolymer, the content of styrene of 67 wt%, MFR: 2.0g/10min (230°C, 2.16kg), density: 0.97 g/cm$^3$

As is clear from Table 1, the resin compositions of Examples 1 to 9 were excellent in all the properties, i.e., the melt viscosity (flowability), the water vapor transmission rate (water vapor barrier properties), the T-peel adhesion strength (adhesiveness), and the thermal shock resistance. On the other hand, Comparative Example 1 contained no filler and therefore exhibited poor water vapor barrier properties. Comparative Example 2 had a large content of the filler and exhibited high melt viscosity, and exhibited poor adhesiveness and thermal shock resistance. Comparative Example 3 contained a spherical filler and therefore exhibited poor water vapor barrier properties. Comparative Example 4 had a small amount of the adhesion imparting agent, exhibited high melt viscosity, and exhibited poor adhesiveness. Comparative Example 5 had too large amount of the adhesion imparting agent and therefore the adhesiveness was decreased. Comparative Example 6 contained no styrene-isobutylene-styrene block copolymer and therefore exhibited poor thermal shock resistance. Comparative Example 7 had a large content of the styrene-isobutylene-styrene block copolymer and exhibited poor adhesiveness. Comparative Example 8 contained the styrene-ethylene-butylene styrene block copolymer in place of the styrene-isobutylene-styrene block copolymer and therefore exhibited poor water vapor barrier properties and poor adhesiveness.

Industrial Applicability

The resin composition according to the present invention exhibits low melt viscosity when molded into a product, exhibits excellent adhesiveness to an aluminum substrate, and exhibits excellent water vapor barrier properties and thermal shock resistance. Therefore, the resin composition according to the present invention is useful as a hot-melt adhesive composition used for the purpose of waterproof.

**Claims**

1.   A resin composition containing: a polyolefin resin (A); an acid-modified polyolefin resin (B); a styrene-isobutylene-styrene block copolymer (C); an adhesion imparting agent (D); and a filler (E), wherein, when a total content of the polyolefin resin (A), the acid-modified polyolefin resin (B), the styrene-isobutylene-styrene block copolymer (C), and the adhesion imparting agent (D) is taken as 100 parts by mass, a content of the styrene-isobutylene-styrene block copolymer (C) is 8 to 32 parts by mass, a content of the adhesion imparting agent (D) is 8 to 27 parts by mass, and a content of the filler (E) is 1 to 13 parts by mass, and wherein the filler (E) is plate-shaped.

2.   The resin composition according to Claim 1, wherein the polyolefin resin (A) contains a polypropylene resin, and further contains at least one of an ethylene-$\alpha$-olefin copolymer and a propylene-$\alpha$-olefin copolymer.

3.   The resin composition according to Claim 1, wherein the acid-modified polyolefin resin (B) has a melting point of 100°C or higher.

4.   The resin composition according to Claim 1, wherein a content of styrene in the styrene-isobutylene-styrene block copolymer (C) is 10 to 30 wt%.

5.   The resin composition according to Claim 1, wherein the adhesion imparting agent (D) has a hydroxyl value of 1 to 100 mgKOH/g.

6.   The resin composition according to Claim 1, wherein, when the total content of the polyolefin resin (A), the acid-modified polyolefin resin (B), the styrene-isobutylene-styrene block copolymer (C), and the adhesion imparting agent (D) is taken as 100 parts by mass, a content of the polyolefin resin (A) is 38 to 70 parts by mass, and a content of the acid-modified polyolefin resin (B) is 1 to 22 parts by mass.

7.   A hot-melt adhesive composition containing the resin composition according to any of Claims 1 to 6.

[FIG. 1]

## INTERNATIONAL SEARCH REPORT

| | International application No. |
|---|---|
| | **PCT/JP2024/003693** |

**A. CLASSIFICATION OF SUBJECT MATTER**

*C08L 23/02*(2006.01)i; *C08K 3/013*(2018.01)i; *C08L 23/26*(2006.01)i; *C08L 53/02*(2006.01)i; *C09J 11/04*(2006.01)i; *C09J 11/08*(2006.01)i; *C09J 123/00*(2006.01)i; *C09J 153/02*(2006.01)i
FI:  C08L23/02; C08L23/26; C08L53/02; C08K3/013; C09J123/00; C09J153/02; C09J11/08; C09J11/04

According to International Patent Classification (IPC) or to both national classification and IPC

**B. FIELDS SEARCHED**

Minimum documentation searched (classification system followed by classification symbols)

C08L23/02; C08K3/013; C08L23/26; C08L53/02; C09J11/04; C09J11/08; C09J123/00; C09J153/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 103554692 A (SUZHOU WANLONG AUTO PARTS CO., LTD.) 05 February 2014 (2014-02-05)<br>entire text | 1-7 |
| A | JP 2019-99807 A (KAO CORPORATION) 24 June 2019 (2019-06-24)<br>entire text | 1-7 |
| A | WO 2022/181690 A1 (SEKISUI FULLER CO., LTD.) 01 September 2022 (2022-09-01)<br>entire text | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/003693**

| Patent document cited in search report | | | Publication date (day/month/year) | Patent family member(s) | | | Publication date (day/month/year) |
|---|---|---|---|---|---|---|---|
| CN | 103554692 | A | 05 February 2014 | (Family: none) | | | |
| JP | 2019-99807 | A | 24 June 2019 | US | 2020/0300327 | A1 | |
| | | | | WO | 2019/107449 | A1 | |
| | | | | EP | 3719069 | A1 | |
| | | | | CN | 111406094 | A | |
| WO | 2022/181690 | A1 | 01 September 2022 | (Family: none) | | | |

Form PCT/ISA/210 (patent family annex) (July 2022)

**EP 4 692 206 A1**

**Patent documents cited in the description**

- JP 2004210893 A